# EUROPEAN PATENT APPLICATION

(11) **EP 4 234 089 A2**
(43) Date of publication of application: **30.08.2023**
(21) Application number: 22207421.3
(22) Date of filing: 15.11.2022
(51) Int. Cl.: B02C 13/08

(54) **IMPACT BLOWER**

(30) Priority: 05.01.2022 JP 2022000724
(71) Applicant: Tatsumi Air Engineering Ltd., Higashi-Osaka-shi, Osaka 578-0921 (JP)
(72) Inventor: NODA, Yasuhiro, Osaka c/o Tatsumi Air Ingineering Ltd., 578-0921 (JP)
(74) Representative: Hering, Hartmut

(57) **Abstract**

A blower casing (3) having an inlet (4) in a side wall (3a) thereof and having an outlet (5) in an upper portion (3bu) of a peripheral wall (3b) thereof, and an impeller (6) to rotate within the blower casing (3) take in a composite (G) including solid resin (K) through the inlet (4) and throw the solid resin (K) radially outward and toward the outlet (5), are included. Multiple crushing blades (7) each of which is in the form of a saw blade are arranged at intervals on an inner peripheral surface of the peripheral wall (3b) of the blower casing (3), the multiple crushing blades (7) being configured such that the solid resin (K) is crushed by collision with the multiple crushing blades (7).

## Description

### BACKGROUND OF THE INVENTION

### Field of the Invention

The present disclosure relates to an impact blower to crush solid resin into recyclable small particles without causing breakage of fiber.

### Description of the Related Art

Automotive interior materials include soundproof materials, ceiling materials, carpets, and the like, each of which is a composite of solid resin made of synthetic resin and fiber layer (s) made of fiber, nonwoven fabric, recovered wool, or the like provided on the solid resin.

Such interior materials are collected after use as scrap. Scraps generated during production are discarded as industrial waste or are collected. The collected ones are subjected to shearing, defibration, crushing, separation, and/or the like to turn from the shape of a composite into recyclable fiber and solid resin.

Related Art 1 in Japanese Unexamined Patent Application Publication No. 2002-172619 (Patent Literature 1) discloses cutting scrap with multiple circular saw blades arranged in the axial direction which are driven to rotate, and defibrating the scrap by scratching it with scratching pins arranged between the circular saw blades.

Related Art 2 in Japanese Patent No. 4089284 (Patent Literature 2) discloses a method of separating a resin material from an automotive interior material. The method is to substantially separate, from an automotive interior material including a nonwoven fabric skin or a woven fabric skin and a base resin formed of a thermoplastic resin foam, a fiber component composed of the nonwoven fabric skin or woven fabric skin and recover the base resin as a resin material. The method includes a first crushing step including crushing the automotive interior material using a shear crusher to obtain a crushed product, a first pneumatic separation step including separating a fiber component from the crushed product by pneumatic separation using a pneumatic separator, a second crushing step including crushing the crushed resin separated by the pneumatic separation using an impact crusher, and a second pneumatic separation step including performing separation of the crushed product by pneumatic separation using the pneumatic separator (claim 1).

The above-described impact crusher is a hammer crusher in which hammers arranged along the circumference of the rotary shaft are driven by the rotation of the rotary shaft to rotate to give impacts to an object, thereby crushing the object.

### SUMMARY OF THE INVENTION

With Related Art 1, the rotation of multiple circular saw blades achieves cutting of the solid resin of the scrap to some extent, but does not achieve crushing of the solid resin. In particular, it is difficult to crush hard resin containing calcium carbonate into fine particles. There are also cases in which the fiber is wrapped around the scratching pins.

With Related Art 2, because impacts are given to the solid resin of the composite using the hammers driven to rotate, it is possible to crush the solid resin by strong impact. However, because the hammers are rotated, the density of impacts and the number of impacts are small, resulting in poor crush efficiency.

Preferred embodiments of the present invention provide impact blowers which solve such issues of related art .

Preferred embodiments of the present invention provide impact blowers each capable of giving many impacts at high density by throwing, with an impeller, a composite taken into the impact blower through an inlet and causing solid resin to collide with crushing blades in the form of a saw blade, and capable of recovering particles resulting from the crushing of the solid resin without damaging fiber.

An embodiment of the present invention includes a blower casing 3 having an inlet 4 in a side wall 3a thereof and having an outlet 5 in an upper portion 3bu of a peripheral wall 3b thereof, an impeller 6 to rotate within the blower casing 3 to take in a composite G including solid resin K through the inlet 4 and throw the solid resin K radially outward and toward the outlet 5, and multiple crushing blades 7 each of which is in the form of a saw blade and which are arranged at intervals on an inner peripheral surface of the peripheral wall 3b of the blower casing 3, the multiple crushing blades 7 being configured such that the solid resin K of the composite G is crushed by collision with the multiple crushing blades 7, wherein each of the multiple crushing blades 7 includes teeth 7a arranged in a line in an axial direction of the impeller 6, and the multiple crushing blades 7 are arranged in parallel to each other at the intervals in a circumferential direction of the peripheral wall 3b.

At least one embodiment of the present invention makes it possible to improve the efficiency of crushing solid resin without damaging fiber.

Specifically, at least one embodiment of the present invention makes it possible to give many impacts at high density by throwing a composite with an impeller and causing solid resin to collide with crushing blades in the form of a saw blade, and also possible to reduce the likelihood that fiber will be damaged.

The above and other elements, features, steps, characteristics and advantages of the present invention will become more apparent from the following detailed description of the preferred embodiments with reference to the attached drawings.

### BRIEF DESCRIPTION OF THE DRAWINGS

A more complete appreciation of preferred embodiments of the present invention and many of the attendant advantages thereof will be readily obtained as the same becomes better understood by reference to the following detailed description when considered in connection with the accompanying drawings described below.
FIG. 1 is a general front view of an embodiment of the present invention.
FIG. 2 is a general plan view of the embodiment.
FIG. 3 is a right side view of a main part of the embodiment.
FIG. 4 illustrates impact crushing.
FIG. 5 is an enlarged view of crushing blades.
FIG. 6 illustrates a variation of the arrangement of crushing blades.
FIG. 7 is a front cross-sectional view of a separator.

### DESCRIPTION OF THE PREFERRED EMBODIMENTS

Preferred embodiments will now be described with reference to the accompanying drawings, wherein like reference numerals designate corresponding or identical elements throughout the various drawings. The drawings are to be viewed in an orientation in which the reference numerals are viewed correctly.

The following description discusses embodiments of the present invention with reference to drawings.

An impact blower 1 is configured such that a composite (e.g., a soundproof material composed of solid resin and a fiber layer [fiber S] such as a layer of nonwoven fabric or recovered wool provided on the solid resin, a ceiling material composed of solid resin [solid resin K] and a skin material bonded to the solid resin), which has been cut into a size that can be conveyed by air using a blower (such a cut composite is referred to as "composite G"), is introduced into the impact blower 1, and that the impact blower 1 crushes the cut pieces of solid resin, which are the solid resin K, into particles Ka (particles resulting from crushing of the solid resin K) of a recyclable size without causing damage to the fiber S of the composite G. The fiber S can be recovered with its fiber length kept long, which is advantageous for recycling.

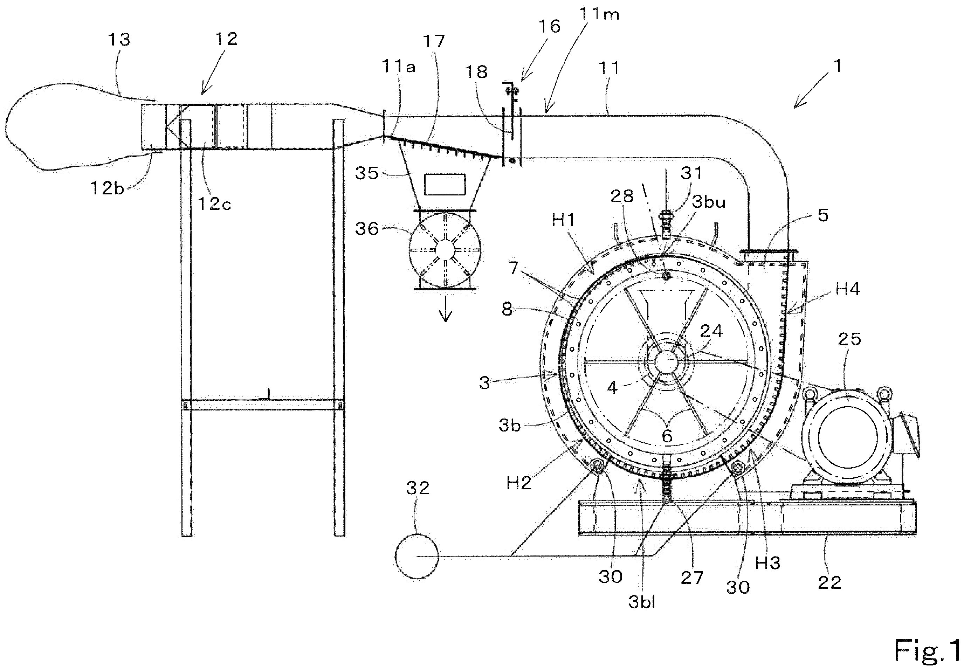

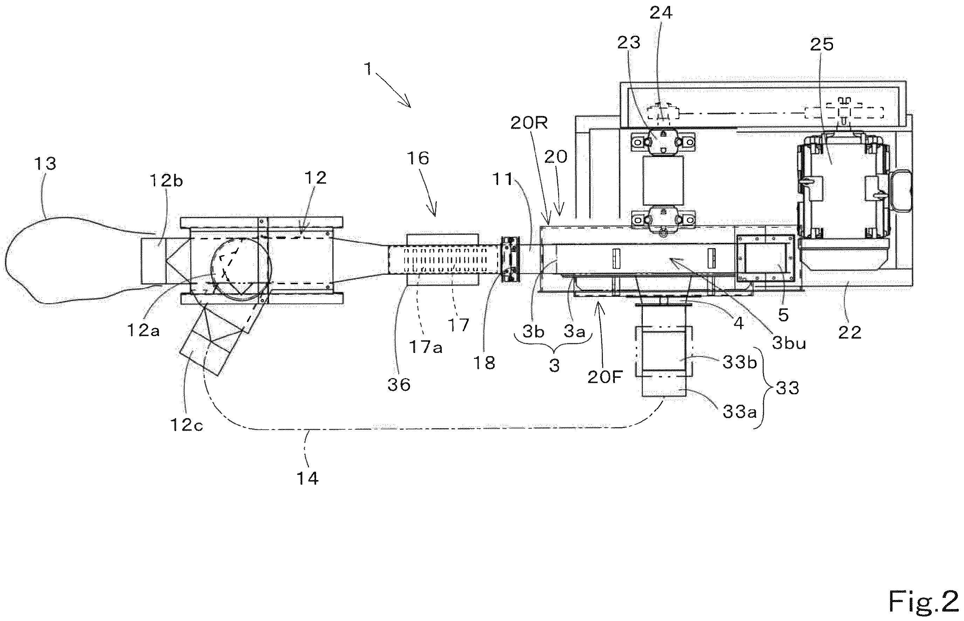

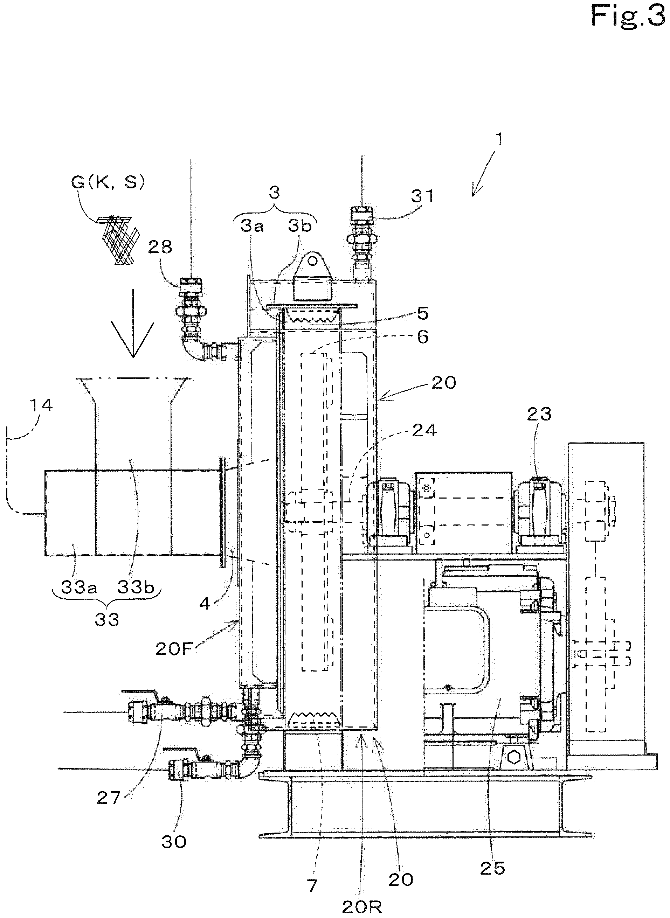

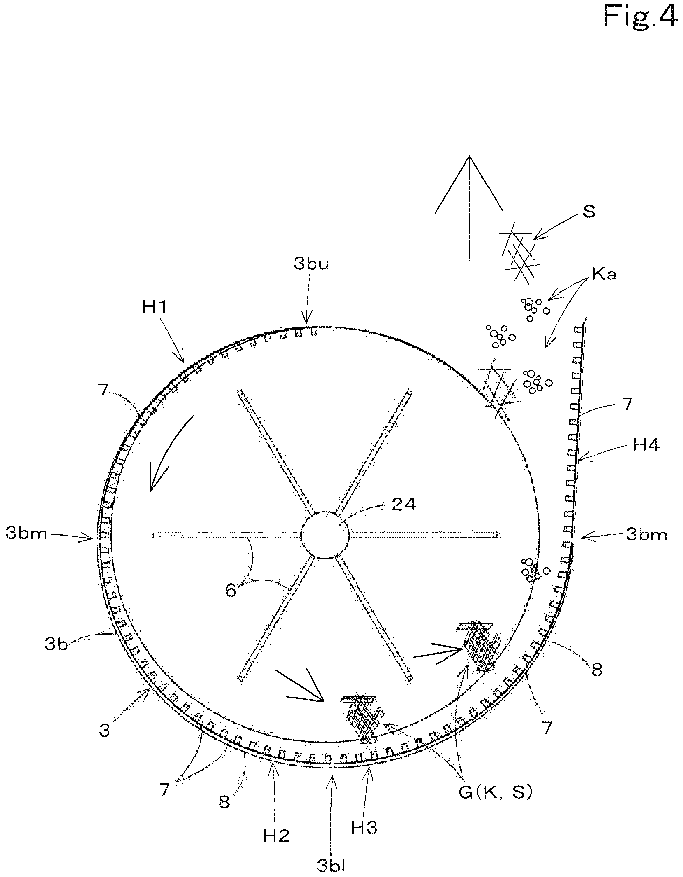

In FIGS. 1 to 4, the impact blower 1 is such that an impeller 6 to be driven to rotate is provided inside a blower casing 3 fixed on a machine base 22, crushing blades 7 are provided on the inner peripheral surface of a peripheral wall 3b of the blower casing 3, a discharge duct 11 is connected to an outlet 5 of the blower casing 3, the discharge duct 11 is provided with a separator 16 at an intermediate portion 11m thereof, the discharge duct 11 is provided with a bifurcation 12 at a distal portion thereof, and an exit (second exit) 12c of the bifurcation 12 is in communication with an inlet 4 of the blower casing 3 via a circulation duct 14.

The blower casing 3 includes side walls 3a at the front and back and the peripheral wall 3b, the side wall 3a at the front has the inlet 4 at the center thereof, the peripheral wall 3b has the outlet 5 in an upper portion 3bu at one of opposite ends, and the peripheral wall 3b is in the form of a spiral curve extending from the upper portion 3bu via a lower portion 3bl to the vicinity of the outlet 5 so that the composite G taken into the blower casing 3 through the inlet 4 flows along the peripheral wall 3b and is guided to the outlet 5.

An impeller shaft 24 is supported on the machine base 22 via a bearing 23. The impeller shaft 24 is inserted in the blower casing 3, is attached to the impeller 6, and supports the impeller 6. The impeller shaft 24 is driven by a motor 25 and drives the impeller 6 to rotate at high speed.

The high speed rotation of the impeller 6 results in high temperature and high pressure of air in the blower casing 3, and the temperature of the blower casing 3 itself increases due to, for example, frictional heat of the impeller shaft 24. Therefore, a front cooling jacket 20F and a surrounding cooling jacket 20R are provided to cool the blower casing 3.

One of the side walls 3a of the blower casing 3 is provided with the front cooling jacket 20F on the outer surface thereof. The front cooling jacket 20F has a water inlet 27 and a water outlet 28 at lower and upper portions thereof, and cools the interior of the blower casing 3 from an outer surface by allowing cooling water to flow through the front cooling jacket 20F. The front cooling jacket 20F closes the opening in the side wall 3a of the blower casing 3 that is for insertion of the impeller 6.

The peripheral wall 3b of the blower casing 3 is provided with the surrounding cooling jacket 20R on the outer peripheral surface thereof. The surrounding cooling jacket 20R also covers the other of the side walls 3a at the back of the blower casing 3. The surrounding cooling jacket 20R has water inlets 30 at two positions in the front surface of an outer peripheral portion thereof, and has a water outlet 31 at one position in an upper portion thereof. The surrounding cooling jacket 20R cools the interior of the blower casing 3 from the outer periphery and from the back by allowing cooling water to flow through the surrounding cooling jacket 20R.

The water inlet 27 and the water outlet 28 of the front cooling jacket 20F and the water inlets 30 and the water outlet 31 of the surrounding cooling jacket 20R are connected to a cooling water chiller (cooling water circulator) 32.

The inlet 4 of the blower casing 3 is connected to an inlet fitting 33. The inlet fitting 33 is in an inverted T shape. A horizontal portion 33a of the inlet fitting 33 passes through the front cooling jacket 20F and projects forward, and a vertical portion extending upward from the horizontal portion 33a is an inlet opening 33b for introduction of another pieces of composite G from above.

The peripheral wall 3b of the blower casing 3 extends from the upper portion 3bu, via one of intermediate portions 3bm and a lower portion 3bl, to the other of the intermediate portions 3bm (the outlet 5-side intermediate portion) such that the peripheral wall 3b gradually goes away from the impeller 6, i.e., the peripheral wall 3b of the blower casing 3 is in the form of a spiral curve extending from the upper portion 3bu via the lower portion 3bl to the vicinity of the outlet 5 so that air taken in through the center of the blower casing 3 is swirled by the impeller 6 and efficiently discharged through the outlet 5.

The multiple crushing blades 7 are arranged at intervals on the inner peripheral surface of the peripheral wall 3b. The multiple crushing blades 7 are arranged at the intervals on mounts 8 in the form of a curved plate to form blocks H1 to H4 of the multiple crushing blades 7 (such blocks may be hereinafter referred to as "blade blocks").

The first blade block H1 extends from the upper portion 3bu to the one of the intermediate portions 3bm of the peripheral wall 3b. The second blade block H2 extends from the one of the intermediate portions 3bm to the lower portion 3b1 of the peripheral wall 3b. The third blade block H3 extends from the lower portion 3bl to the outlet 5-side intermediate portion 3bm of the peripheral wall 3b. The fourth blade block H4 extends from the outlet 5-side intermediate portion 3bm of the peripheral wall 3b to the interior of the outlet 5.

The first blade block H1 is positioned closer to the impeller 6 than the second blade block H2 is to the impeller 6. The third blade block H3 is positioned further away from the impeller 6 than the second blade block H2 is from the impeller 6. The first blade block H1, the second blade block H2, and the third blade block H3 are in the form of a curved plate, and the fourth blade block H4 is in the form of a flat plate.

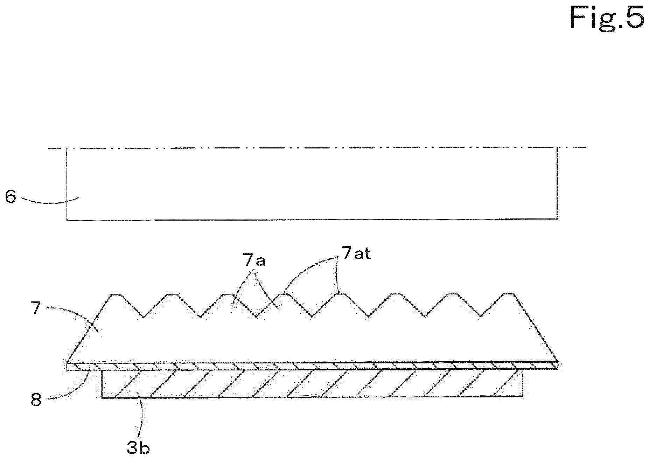

The crushing blades 7 of each of the blade blocks H1 to H4 are in the form of a saw blade as illustrated in FIG. 5, and teeth 7a thereof have flat tops 7at. The tops 7at of the teeth 7a may each have an acute angle. The teeth 7a of one of adjacent ones of the multiple crushing blades 7 and the teeth 7a of the other of the adjacent ones of the multiple crushing blades 7 are in alignment with each other.

The impeller 6 rotates at high speed to take in the composite G through the inlet 4 and throw the composite G radially outward while rotating. It is noted here that, with regard to the composite G, the solid resin K having high specific gravity collides with the crushing blades 7 and receives impacts from the crushing blades 7 before the contact of the fiber S with the crushing blades 7, and the fiber S having low specific gravity makes contact with the crushing blades 7 after the collision of the solid resin K with the crushing blades 7.

The number of such teeth 7a of the crushing blades 7 is large, and the teeth 7a are arranged densely. Therefore, when a piece of the solid resin K makes a collision with the teeth 7a, the piece of the solid resin K receives impacts at densely spaced points (i.e., many times), making it possible to efficiently crush the solid resin K and also possible to separate the solid resin K from the fiber S. The fiber S makes contact with the crushing blades 7 after the collision of the solid resin K with the crushing blades 7, but is little or not damaged because the crushing blades 7 do not have sharp edges.

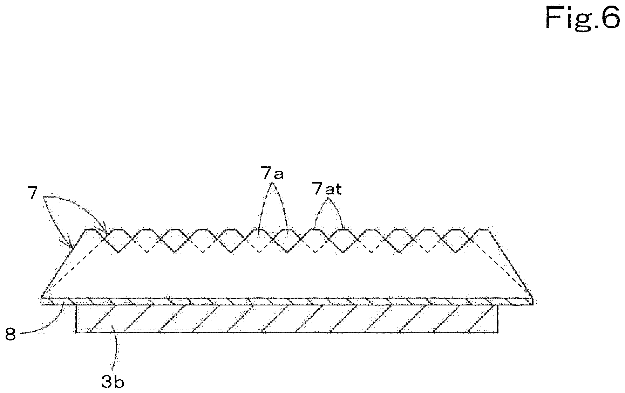

FIG. 6 illustrates a variation of the arrangement of the crushing blades 7, in which the teeth 7a of one crushing blade 7 and the teeth 7a of another crushing blade 7 are out of alignment with each other by half the pitch of the teeth in the axial direction of the impeller 6. This is to reduce the likelihood that the particles Ka will be stuck between the teeth 7a.

In FIGS. 1, 2, and 7, the discharge duct 11 is connected to the outlet 5 of the blower casing 3. The discharge duct 11 extends upward from the outlet 5 and then is bent to extend horizontally. The horizontally extending portion is provided with the separator 16 at an intermediate portion thereof. The discharge duct 11 is provided with the bifurcation 12 at the distal portion thereof.

The separator 16 allows the particles Ka to fall out of air used in crushing the solid resin K in the blower casing 3 (such air may be hereinafter referred to as "crushing air") and keeps the fiber S in the crushing air to separate the particles Ka. The separator 16 includes a sieve plate 17 to allow the particles Ka to fall out of the crushing air and to allow the fiber S to be drawn up, and an air guide 18 to guide the crushing air from an upstream portion of the discharged duct 11 to the sieve plate 17 such that the speed of the crushing air increases.

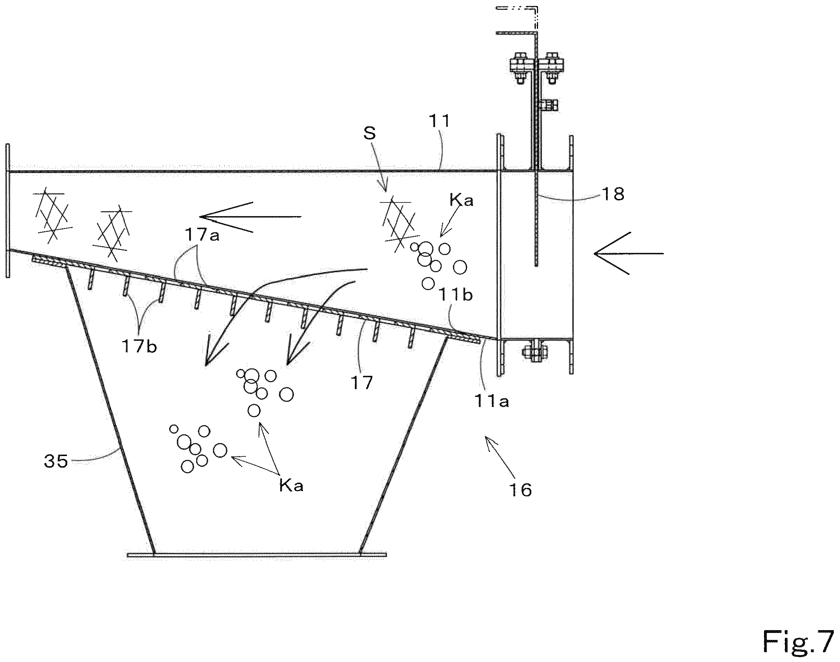

In FIGS. 1 and 7, the discharge duct 11 includes, at the intermediate portion 11m thereof, an upward sloping bottom wall 11a sloping upward in the direction of flow of the crushing air. The upward sloping bottom wall 11a has an opening 11b, and the sieve plate 17 is located to close the opening 11b.

The sieve plate 17 has drop holes 17a arranged in the direction of the flow of the crushing air. The sieve plate 17 is provided, on the lower surface thereof, with partitioning protrusions 17b provided along edges of the drop holes 17a. The upward sloping bottom wall 11a is also provided, on the lower surface thereof, with a chute 35 and a rotary valve 36.

The air guide 18 is located upstream of the sieve plate 17 in the direction of flow of the crushing air, and is formed of a plate inserted through the upper surface of the discharge duct 11 into the discharge duct 11 in a direction orthogonal to the upper surface. The extent to which the air guide 18 is inserted in the discharge duct 11 is adjustable. The insertion of the air guide 18 in the discharge duct 11 changes the flow of the crushing air flowing in an upper portion of the interior of the discharge duct 11 such that the crushing air flows in a lower portion of the interior of the discharge duct 11, and also increases the speed of the crushing air.

The upward sloping bottom wall 11a of the discharge duct 11 also constitutes a portion of the air guide 18. The crushing air from the upstream portion of the discharge duct 11 flows downward at increasing speed because of the air guide 18, is guided to the surface of the upward sloping sieve plate 17, and the particles Ka enter the drop holes 17a of the sieve plate 17 and fall down while hitting the partitioning protrusions 17b. The fiber S, coarse particles other than the particles Ka, and/or the like contained in the crushing air do not enter the drop holes 17a but are sent to the distal portion of the discharge duct 11.

The crushing air flows at high speed along the upper surface of the sieve plate 17, causing an "ejector effect" producing negative pressure inside and below the drop holes 17a. With this, the fiber S is drawn upward when it has entered or is about to enter any of the drop holes 17a.

There may be cases in which fiber S wrapped around a particle Ka enters any of the drop holes 17a. Such fiber S also hits a corresponding partitioning protrusion 17b after passing through the drop hole 17a, the particle Ka is separated from the fiber S, the fiber S alone is drawn up by the ejector effect, and the fiber S is sent to the distal portion of the discharge duct 11 and recovered without damage.

The discharge duct 11 is provided, at the distal portion thereof, the bifurcation 12 including a direction switching valve 12a. The bifurcation 12 includes two exits, one of which is a first exit 12b having a container 13 detachably attached thereto, and the other of which is a second exit 12c having connected thereto the circulation duct 14 in communication with the inlet 4.

Although the whole amount of solid resin K in the blower casing 3 can be crushed by impact by passing it through the impact blower only once, usually it is necessary to pass it through the impact blower a plurality of times. The bifurcation 12 is brought by the direction switching valve 12a into a mode in which the bifurcation 12 is in communication with the second exit 12c, insufficiently crushed solid resin K is transferred from the discharge duct 11 to the circulation duct 14 and returned into the blower casing 3 through the inlet 4, and the solid resin K is thrown against the crushing blades 7 by the impeller 6. Fiber S is also subjected to the throwing effect of the impeller 6 through the circulation duct 14. However, because the fiber S is lighter than the solid resin K, the fiber S is not subjected to the crushing effect of the crushing blades 7 or damaged.

By performing the foregoing circulation-crushing a plurality of times, it is possible to allow a desired amount of particles Ka to fall through the sieve plate 17 and recover them using the chute 35 and the rotary valve 36, and possible to recover, through the first exit 12b, the fiber S maintaining long fiber length and not or little damaged.

After the circulation-crushing, the direction switching valve 12a of the bifurcation 12 is rotated to bring the bifurcation 12 into a mode in which the bifurcation 12 is in communication with the first exit 12b, and the fiber S is stored in the container 13.

At least one embodiment as discussed above includes a blower casing 3 having an inlet 4 in a side wall 3a thereof and having an outlet 5 in an upper portion 3bu of a peripheral wall 3b thereof, an impeller 6 to rotate within the blower casing 3 to take in a composite G including solid resin K through the inlet 4 and throw the solid resin K radially outward and toward the outlet 5, and multiple crushing blades 7 each of which is in the form of a saw blade and which are arranged at intervals on an inner peripheral surface of the peripheral wall 3b of the blower casing 3, the multiple crushing blades 7 being configured such that the solid resin K of the composite G is crushed upon collision with the multiple crushing blades 7.

The configuration makes it possible to throw the solid resin K by the impeller 6 to cause the solid resin K to collide with the crushing blades 7 each in the form of a saw blade, making it possible to give many impacts to the solid resin K at high density to crush the solid resin K and also possible to reduce the likelihood that the fiber will be damaged.

In at least one embodiment as discussed above, the peripheral wall 3b of the blower casing 3 is in the form of a spiral curve extending from the upper portion 3bu thereof via a lower portion 3bl thereof to a vicinity of the outlet 5, the multiple crushing blades 7 are arranged on mounts 8 at the intervals to form first to third blade blocks H1, H2, and H3, the first blade block H1 extends from the upper portion 3bu of the peripheral wall 3b to an intermediate portion 3bm of the peripheral wall 3b, the second blade block H2 extends from the intermediate portion 3bm of the peripheral wall 3b to the lower portion 3bl of the peripheral wall 3b, the third blade block H3 extends from the lower portion 3bl of the peripheral wall 3b to the vicinity of the outlet 5, and the first blade block H1 is positioned closer to the impeller 6 than the second blade block H2 is to the impeller 6, and the third blade block H3 is positioned further away from the impeller 6 than the second blade block H2 is from the impeller 6.

The configuration makes it possible to throw the solid resin K by the impeller 6 to cause the solid resin K to collide with the crushing blades 7 and convey the crushed product to the outlet 5.

In at least one embodiment as discussed above, the multiple crushing blades 7 are arranged such that the teeth 7a of one of adjacent ones of the multiple crushing blades 7 and the teeth 7a of the other of the adjacent ones of the multiple crushing blades 7 are in alignment with each other or out of alignment with each other in the axial direction of the impeller 6.

The configuration makes it possible to achieve many, densely arranged points which give impacts to the solid resin K.

In at least one embodiment as discussed above, the outlet 5 of the blower casing 3 has connected thereto a discharge duct 11, the discharge duct 11 is provided, at a distal portion thereof, a bifurcation 12 including a direction switching valve 12a, the bifurcation 12 has a container 13 detachably attached to a first exit 12b thereof, and the bifurcation 12 has, connected to a second exit 12c thereof, a circulation duct 14 in communication with the inlet 4.

The configuration makes it possible to perform crushing by circulation into the blower casing 3 until particles Ka of solid resin K discharged from the outlet 5 have a desired size.

In at least one embodiment as discussed above, the outlet 5 of the blower casing 3 has connected thereto a discharge duct 11, and the discharge duct 11 is provided, at an intermediate portion 11m thereof, with a separator 16 to allow the particles Ka resulting from crushing the solid resin K to fall down.

The configuration makes it possible to recover, with the separator 16, the particles Ka resulting from crushing.

In at least one embodiment as discussed above, the separator 16 includes a sieve plate 17 to allow the particles Ka to fall out of the air, and an air guide 18 to guide the air from an upstream portion of the discharged duct 11 to the sieve plate 17 such that a speed of the air increases.

With the configuration, the air guide 18 is capable of supplying the crushing air to the upper surface of the sieve plate 17 such that the speed of the crushing air increases, making it possible to efficiently send the fiber S downstream while causing an ejector effect at the sieve plate 17 and possible to efficiently recover the particles Ka.

In at least one embodiment as discussed above, the sieve plate 17 has drop holes 17a arranged in a direction of flow of the air, and the sieve plate 17 is provided, on a lower surface thereof, with partitioning protrusions 17b provided along edges of the drop holes 17a.

With the configuration, even if the fiber S enters any of the drop holes 17a, the fiber S collides with a corresponding partitioning protrusion 17b, is separated from the particles Ka, is drawn upward by air suction caused by the ejector effect, and is sent to a downstream portion of the discharge duct 11.

In at least one embodiment as discussed above, the blower casing 3 is provided, on an outer surface of the side wall 3a thereof and on an outer peripheral surface of the peripheral wall 3b thereof, with cooling jackets 20 to allow cooling water to flow therein.

The configuration makes it possible to cool heat generated by the collision of the solid resin K, the rotation of the impeller 6, and/or the like.

The present invention is not limited to the foregoing embodiments, and the shapes, configurations, combinations, and/or the like of members may be changed.

For example, with regard to crushing blades 7 of each blade block H, multiple long saw blades each in parallel to the axis of the impeller 6 are arranged at intervals in the direction of rotation of the impeller 6. Note, however, that multiple curved saw blades each elongated in the direction of rotation of the impeller 6 may be arranged at intervals in the axial direction of the impeller 6.

A plurality of impact blowers 1 may be prepared, and the circulation duct 14 connected to the second exit 12c of the bifurcation 12 of one impact blower 1 may be communicated with the inlet 4 of an adjacent impact blower 1.

The teeth 7a of the crushing blades 7 may have a round shape instead of the flat shape, provided that the teeth 7a have a shape that crushes the solid resin K but causes no or little damage (including cutting) to the fiber S.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An impact blower comprising:
a blower casing (3) having an inlet (4) in a side wall (3a) thereof and having an outlet (5) in an upper portion (3bu) of a peripheral wall (3b) thereof; and
an impeller (6) to rotate within the blower casing (3) to take in a composite (G) including solid resin (K) through the inlet (4) and throw the solid resin (K) radially outward and toward the outlet (5), **characterized by** comprising:
multiple crushing blades (7) each of which is in the form of a saw blade and which are arranged at intervals on an inner peripheral surface of the peripheral wall (3b) of the blower casing (3), the multiple crushing blades (7) being configured such that the solid resin (K) of the composite (G) is crushed by collision with the multiple crushing blades (7), wherein
each of the multiple crushing blades (7) includes teeth (7a) arranged in a line in an axial direction of the impeller (6), and the multiple crushing blades (7) are arranged in parallel to each other at the intervals in a circumferential direction of the peripheral wall (3b).

2. The impact blower according to claim 1, wherein the peripheral wall (3b) of the blower casing (3) is in the form of a spiral curve extending from the upper portion (3bu) thereof via a lower portion (3bl) thereof to a vicinity of the outlet (5),
the multiple crushing blades (7), each in the form of a saw blade and each including the teeth (7a) arranged in a line in the axial direction of the impeller (6), are arranged on mounts (8) at the intervals in the circumferential direction of the peripheral wall (3b) to form first to third blocks (H1, H2, and H3) of the multiple crushing blades (7),
the first block (H1) extends from the upper portion (3bu) of the peripheral wall (3b) to an intermediate portion (3bm) of the peripheral wall (3b) in the circumferential direction,
the second block (H2) extends from the intermediate portion (3bm) of the peripheral wall (3b) in the circumferential direction to the lower portion (3bl) of the peripheral wall (3b),
the third block (H3) extends from the lower portion (3bl) of the peripheral wall (3b) to the vicinity of the outlet (5), and
the teeth (7a) of the first block (H1) are positioned closer to the impeller (6) than the teeth (7a) of the second block (H2) are to the impeller (6), and the teeth (7a) of the third block (H3) are positioned further away from the impeller (6) than the teeth (7a) of the second block (H2) are from the impeller (6).

3. The impact blower according to claim 1 or 2, wherein the multiple crushing blades (7) are arranged such that the teeth (7a) of one of adjacent ones of the multiple crushing blades (7) and the teeth (7a) of the other of the adjacent ones of the multiple crushing blades (7) are in alignment with each other or are out of alignment with each other in the axial direction of the impeller (6).

4. The impact blower according to any one of claims 1 to 3, wherein the teeth (7a) of the multiple crushing blades (7) have flat tops (7at).

5. The impact blower according to any one of claims 1 to 4, wherein
the outlet (5) of the blower casing (3) has a discharge duct (11) connected thereto for discharge of air used in crushing, the air containing fiber (S) and particles (Ka) resulting from crushing of the solid resin (K),
the discharge duct (11) is provided, at an intermediate portion (11m) thereof, with a separator (16) to allow the particles (Ka) resulting from crushing of the solid resin (K) to fall out of the air and keep the fiber (S) in the air,
the discharge duct (11) is provided, at a distal portion thereof, a bifurcation (12) including a direction switching valve (12a),
the bifurcation (12) has, detachably attached to a first exit (12b) thereof, a container (13) for the fiber (S) separated from the solid resin (K), and
the bifurcation (12) has, connected to a second exit (12c) thereof, a circulation duct (14) communicated with the inlet (4) for re-crushing of solid resin (K) that has not been crushed sufficiently.

6. The impact blower according to any one of claims 1 to 4, wherein
the outlet (5) of the blower casing (3) has a discharge duct (11) connected thereto for discharge of air used in crushing, the air containing fiber (S) and particles (Ka) resulting from crushing of the solid resin (K),
the discharge duct (11) is provided, at an intermediate portion (11m) thereof, with a separator (16) to allow the particles (Ka) resulting from crushing of the solid resin (K) to fall out of the air and keep the fiber (S) in the air, and
the separator (16) includes
a sieve plate (17) to allow the particles (Ka) to fall out of the air, and
an air guide (18) to guide the air from an upstream portion of the discharged duct (11) to the sieve plate (17) such that a speed of the air increases.

7. The impact blower according to claim 6, wherein the sieve plate (17) has drop holes (17a) to allow the particles (Ka) to fall, the drop holes (17a) being arranged in a direction of flow of the air, and
the sieve plate (17) is provided, on a lower surface thereof, with partitioning protrusions (17b) provided along edges of the drop holes (17a) for collision with the particles (Ka).

8. The impact blower according to any one of claims 1 to 7, wherein
the blower casing (3) is provided, on an outer surface of the side wall (3a) thereof, with a front cooling jacket (20F) to allow cooling water to flow therein, and is provided, on an outer peripheral surface of the peripheral wall (3b) thereof, with a surrounding cooling jacket (20R) to allow cooling water to flow therein, and
the front cooling jacket (20F) closes an opening in the side wall (3a), the opening being for insertion of the impeller (6), and the front cooling jacket (20F) has an inlet fitting (33) of the inlet (4) passing therethrough.
